# EUROPEAN PATENT APPLICATION

(11) **EP 4 645 478 A2**
(43) Date of publication of application: **05.11.2025**
(21) Application number: 25170259.3
(22) Date of filing: 14.04.2025
(51) Int. Cl.: H01M 4/66, H01M 10/052

(54) **COMPOSITE SUBSTRATE FOR RECHARGEABLE LITHIUM BATTERY, AND RECHARGEABLE LITHIUM BATTERY INCLUDING THE SAME**

(30) Priority: 30.04.2024 KR 20240057465
(71) Applicant: SAMSUNG SDI CO., LTD., Yongin-si, Gyeonggi-do 17084 (KR)
(72) Inventor: KWON, Minseok, 17084 Gyeonggi-do (KR); HWANG, Heeyeon, 17084 Gyeonggi-do (KR); KIM, Suhyun, 17084 Gyeonggi-do (KR); LEE, KyuSeo, 17084 Gyeonggi-do (KR); CHA, Jungwook, 17084 Gyeonggi-do (KR); KANG, Dayoung, 17084 Gyeonggi-do (KR)
(74) Representative: Michalski Hüttermann & Partner Patentanwälte mbB

(57) **Abstract**

Example embodiments include a composite substrate for a rechargeable lithium battery, and a rechargeable lithium battery including the composite substrate. Example embodiments include a composite substrate for a rechargeable lithium battery that includes a support layer containing a polymer resin matrix and two or more conductive materials, and a metal layer on at least one surface of the support layer, wherein the two or more conductive materials include two or more materials including at least one of a conductive metal, a conductive polymer, a conductive oxide, a fibrous material (FIB), and a carbon nanotube (CNT).

## Description

### CROSS-REFERENCE TO RELATED APPLICATIONS

This U.S. non-provisional patent application claims priority under 35 U.S.C. § 119 to Korean Patent Application No. 10-2024-0057465, filed on April 30, 2024, the entire contents of which are hereby incorporated by reference.

### BACKGROUND

Examples of the present disclosure relate to a composite substrate for a rechargeable lithium battery, and to a rechargeable lithium battery including the composite substrate.

The increased spread of battery-powered electronics, such as, e.g., mobile phones, laptop computers, electric vehicles, and the like, has driven a sharp rise in demand for rechargeable batteries having high energy density and high capacity.

Rechargeable lithium batteries typically include a positive electrode and a negative electrode, each of the positive electrode and the negative electrode including an active material that allows intercalation and deintercalation of lithium ions, and an electrolyte solution. Rechargeable lithium batteries produce electrical energy from redox reactions that take place as lithium ions are intercalated into or deintercalated from the positive electrode and the negative electrode.

### SUMMARY

Examples of the present disclosure include a composite substrate having improved stability and battery performance resulting from improved energy density and specific resistance.

Examples of the present disclosure also include a composite substrate having low interfacial resistance and improved adhesion to an active material.

Examples of the present disclosure also include a rechargeable lithium battery including the composite substrate.

An example embodiment of the present disclosure includes a composite substrate for a rechargeable lithium battery, the composite substrate including a support layer containing a polymer resin matrix and two or more conductive materials, and a metal layer on at least one surface of the support layer, wherein the two or more conductive materials are two or more materials including at least one of a conductive metal, a conductive polymer, a conductive oxide, a fibrous material (FIB), and a carbon nanotube (CNT).

In an example embodiment of the present disclosure, a composite substrate for a rechargeable lithium battery includes a support layer containing a polymer resin matrix and two or more conductive materials, a metal layer on at least one surface of the support layer, and a functional layer on the metal layer, wherein the functional layer includes metal carbide oxide, and the two or more conductive materials are two or more materials including at least one of a conductive metal, a conductive polymer, a conductive oxide, a fibrous material (FIB), and a carbon nanotube (CNT).

In an example embodiment of the present disclosure, a rechargeable lithium battery includes a composite substrate including a support layer containing a polymer resin matrix and two or more conductive materials, and a metal layer on at least one surface of the support layer, and a battery cell on the metal layer, wherein the two or more conductive materials are two or more materials including at least one of a conductive metal, a conductive polymer, a conductive oxide, a fibrous material (FIB), and a carbon nanotube (CNT).

### BRIEF DESCRIPTION OF THE FIGURES

The accompanying drawings are included to provide a further understanding of the present disclosure, and are incorporated in and constitute a part of this specification. The drawings illustrate example embodiments of the present disclosure and, together with the description, explain principles of the present disclosure. In the drawings:
FIG. 1 is a simplified conceptual view illustrating a rechargeable lithium battery according to example embodiments of the present disclosure;
FIGS. 2 to 5 are schematic views illustrating a rechargeable lithium battery according to an example embodiment;
FIG. 6 is a cross-sectional view describing a rechargeable lithium battery according to an example embodiment of the present disclosure;
FIG. 7 is a cross-sectional view describing a composite substrate according to an example embodiment of the present disclosure; and
FIG. 8 is a cross-sectional view describing a composite substrate according to another example embodiment of the present disclosure.

### DETAILED DESCRIPTION

In order to sufficiently understand the configuration and effects of the present disclosure, example embodiments of the present disclosure will be described with reference to the accompanying drawings. It should be noted, however, that the present disclosure is not limited to the following example embodiments, and may be implemented in various forms and variously modified. The example embodiments herein are provided so that present disclosure will be thorough and complete and will fully convey the scope of the present disclosure to those skilled in the art.

Herein, it will be understood that when a component is referred to as being "on" another component, the component may be "directly on" another component, or an intervening third component may be present. In addition, in the drawings, thicknesses of components are exaggerated for effectively describing technical contents. Like reference numerals refer to like elements throughout.

Unless otherwise specified herein, the expression of singular form may include the expression of plural form. In addition, unless otherwise specified, the phrase "A or B" may indicate "A but not B," "B but not A," or "A and B." The terms "comprises" and/or "comprising" used herein do not exclude the presence or addition of one or more other components.

As used herein, the term "combination thereof" may refer to a mixture, a stack, a composite, a copolymer, an alloy, a blend, or a reaction product.

Unless otherwise defined herein, a particle diameter may be an average particle diameter. In addition, a particle diameter is defined as an average particle diameter (D50) indicating the diameter of particles at a cumulative volume of 50 vol% in particle size distribution. The average particle diameter (D50) may be measured by a method widely known to those skilled in the art, for example, by a particle size analyzer, an image of transmission electron microscope (TEM), or an image of scanning electron microscope (SEM). Alternatively, the average particle diameter (D50) may be measured by a measurement device using dynamic light-scattering, wherein data analysis is conducted to count the number of particles for each particle size range, and an average particle diameter (D50) value may subsequently be obtained through calculation. Also, a laser scattering method may be utilized to measure the average particle diameter. In the measuring using the laser diffraction method, for example, target particles are dispersed in a dispersion medium, introduced into a commercially available laser diffraction particle diameter measuring device (e.g., MT 3000 available from Microtrac, Ltd.), irradiated with ultrasonic waves of 28 kHz at a power of 60 W, and an average particle diameter (D50) based on 50% of the particle diameter distribution in the measuring device may subsequently be calculated.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

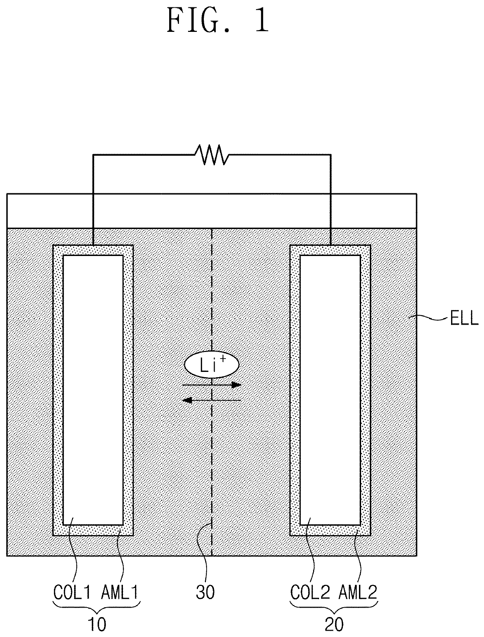

FIG. 1 is a simplified conceptual view showing a rechargeable lithium battery according to example embodiments of the present disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced apart from each other by the separator 30. The separator 30 may be disposed between the positive electrode 10 and the negative electrode 20. The positive electrode 10, the negative electrode 20 and the separator 30 may be in contact with the electrolyte solution ELL. The positive electrode 10, the negative electrode 20 and the separator 30 may be impregnated in the electrolyte solution ELL.

The electrolyte solution ELL may be or include a medium for transferring lithium ions between the positive electrode 10 and the negative electrode 20. In the electrolyte solution ELL, the lithium ions may move through the separator 30 toward the positive electrode 10 or the negative electrode 20.

### Positive Electrode 10

The positive electrode 10 for a rechargeable lithium battery may include a current collector COL1 and a positive electrode active material layer AML1 on the current collector COL1. The positive electrode active material layer AML1 may include a positive electrode active material and may further include a binder and/or a conductive material.

For example, the positive electrode 10 may further include an additive configured to be a sacrificial positive electrode.

The positive electrode active material layer AML1 may contain ≥ 90 wt% to ≤ 99.5 wt% of the positive electrode active material with respect to 100 wt% of the positive electrode active material layer AML1. With respect to 100 wt% of the positive electrode active material layer AML1, the binder and the conductive material may amount to ≥ 0.5 wt% to ≤ 5 wt%.

The binder may attach positive electrode active material particles to one another and also to attach the positive electrode active material to the current collector COL1. Typical examples of the binder may be or include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinyl pyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but the example embodiment of the present disclosure is not limited thereto.

The conductive material may be configured to impart conductivity to the electrode. Any material that does not cause chemical changes and is an electron conductive material may be usable in batteries. Examples of the conductive material may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminum, silver, and the like in a form of a metal powder or a metal fiber; a conductive polymer such as a polyphenylene derivative; or a mixture thereof.

Al may constitute the current collector COL1, but the example embodiment of the present disclosure is not limited thereto.

### Positive Electrode Active Material

A compound capable of reversibly intercalating and deintercalating lithium (lithiated intercalation compound) may constitute a positive electrode active material in a positive electrode active material layer AML1. For example, at least one of a complex oxide of lithium and a metal including at least one of cobalt, manganese, nickel, and a combination thereof may be used.

The complex oxide may be or include a lithium transition metal complex oxide, and examples thereof include at least one of lithium nickel-based oxide, lithium cobalt-based oxide, lithium manganese-based oxide, lithium iron phosphate-based compound, and cobalt-free nickel-manganese-based oxide, or a combination thereof.

For example, a compound represented by any one among Formulas below may constitute the complex oxide. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5,0≤c≤0.05); LiₐNi_{1-b-c}Co_{b}X_{c}O_{2-α}D_{α} (0.90≤a≤1.8, 0≤b≤0.5,0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li(_{3-f)}Fe₂(PO₄)₃ (0≤f≤2); LiₐFePO₄ (0.90≤a≤1.8).

In Formulas above, A is or includes at least one of Ni, Co, Mn, or a combination thereof, X is or includes at least one of Al, Ni, Co, Mn, Cr, Fe, Mg, Sr, V, a rare earth element, or a combination thereof, D is or includes at least one of O, F, S, P, or a combination thereof, G is or includes at least one of Al, Cr, Mn, Fe, Mg, La, Ce, Sr, V, or a combination thereof, and L¹ is or includes at least one of Mn, Al, or a combination thereof.

For example, the positive electrode active material may be or include a high nickel-based positive electrode active material having a nickel content of 80 mol% or greater, 85 mol% or greater, 90 mol% or greater, 91 mol% or greater, or 94 mol% or greater, with respect to 100 mol% of metals excluding lithium from the lithium transition metal complex oxide. The high nickel-based positive electrode active material may achieve high capacity and may thus be applied to high-capacity, high-density rechargeable lithium batteries.

### Negative Electrode 20

The negative electrode 20 for a rechargeable lithium battery may include a current collector COL2 and a negative electrode active material layer AML2 on the current collector COL2. The negative electrode active material layer AML2 may include a negative electrode active material, and may further include a binder and/or a conductive material.

For example, the negative electrode active material layer AML2 may include ≥ 90 wt% to ≤ 99 wt% of the negative electrode active material, ≥ 0.5 wt% to ≤ 5 wt% of the binder, and ≥ 0 wt% to ≤ 5 wt% of the conductive material.

The binder may be configured to attach the negative electrode active material particles to each other and also to attach the negative electrode active material to the current collector COL2. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, and polyimide, or a combination thereof.

The aqueous binder may be or include at least one of a styrene-butadiene rubber, a (meth)acrylated styrene-butadiene rubber, a (meth)acrylonitrile-butadiene rubber, a (meth)acrylic rubber, a butyl rubber, a fluoro rubber, polyethylene oxide, polyvinyl pyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is the negative electrode binder, a cellulose-based compound configured to impart viscosity may be further included. The cellulose-based compound may include at least one of carboxymethyl cellulose, hydroxypropylmethyl cellulose, and methyl cellulose, or an alkali metal salt thereof. The alkali metal may include at least one of Na, K, and Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may be configured to impart conductivity to the electrode. Any material that does not cause chemical changes and is an electron conductive material may be usable in batteries. Examples of the conductive material may include a carbon-based material such as or including at least one of natural graphite, artificial graphite, carbon black, acetylene black, Ketjen black, a carbon fiber, a carbon nanofiber, and carbon nanotube; a metal-based material including at least one of copper, nickel, aluminum, silver, and the like in a form of a metal powder or a metal fiber; a conductive polymer such as a polyphenylene derivative; or a mixture thereof.

The current collector COL2 may include a copper foil, a nickel foil, a stainless steel foil, a titanium foil, a nickel foam, a copper foam, a polymer substrate coated with a conductive metal, or a combination thereof

### Negative Electrode Active Material

The negative electrode active material in the negative electrode active material layer AML2 may include a material that reversibly intercalates/deintercalates lithium ions, a lithium metal, a lithium metal alloy, a material capable of doping/de-doping lithium, or a transition metal oxide.

The material that reversibly intercalates/deintercalates lithium ions may include a carbon-based negative electrode active material, such as, for example. at least one of crystalline carbon, amorphous carbon or a combination thereof. Examples of the crystalline carbon may be or include graphite such as irregular, planar, flaky, spherical, or fibrous natural graphite or artificial graphite, and examples of the amorphous carbon may be or include at least one of soft carbon, hard carbon, mesophase pitch carbide, fired cokes, and the like.

The lithium metal alloy includes an alloy of lithium and a metal including at least one of Na, K, Rb, Cs, Fr, Be, Mg, Ca, Sr, Si, Sb, Pb, In, Zn, Ba, Ra, Ge, Al, and Sn.

The material capable of doping/de-doping lithium may be or include a Si-based negative electrode active material or a Sn-based negative electrode active material. The Si-based negative electrode active material may be or include silicon, a silicon-carbon composite, SiOx (0 < x < 2), a Si-Q alloy (where Q includes at least one of an alkali metal, an alkaline earth metal, a Group 13 element, a Group 14 element (except for Si), a Group 15 element, a Group 16 element, a transition metal, a rare-earth element, and a combination thereof), or a combination thereof. The Sn-based negative electrode active material may be or include at least one of Sn, SnO₂, a Sn-based alloy, or a combination thereof.

The silicon-carbon composite may be or include a composite of silicon and amorphous carbon. According to an example embodiment, the silicon-carbon composite may be in a form of silicon particles and amorphous carbon coated on the surface of the silicon particles. For example, the silicon-carbon composite may include a secondary particle (core), in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

### Separator 30

Depending on the type of the rechargeable lithium battery, the separator 30 may be located between the positive electrode 10 and the negative electrode 20. The separator 30 may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 30 may include a porous substrate and a coating layer including an organic material, an inorganic material, or a combination thereof on one or both surfaces of the porous substrate.

The porous substrate may be or include a polymer film formed of or including any one polymer including at least one of polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked.

### Electrolyte Solution ELL

The electrolyte solution ELL for a rechargeable lithium battery may include a non-aqueous organic solvent and a lithium salt.

The non-aqueous organic solvent may constitute a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include at least one of ethanol, isopropyl alcohol, and the like, and the aprotic solvent may include nitriles such as R-CN (where R is a C2 to C20 linear, branched, or cyclic hydrocarbon group and may include a double bond, an aromatic ring, or an ether group); amides such as dimethylformamide; dioxolanes such as 1,3-dioxolane, 1,4-dioxolane; sulfolanes, and the like.

The non-aqueous organic solvents may be used alone or in combination of two or more solvents.

In addition, when using a carbonate-based solvent, a cyclic carbonate and a chain carbonate may be mixed and used, and the cyclic carbonate and the chain carbonate may be mixed in a volume ratio of 1:1 to 1:9.

The lithium salt dissolved in the organic solvent supplies lithium ions in a battery, enables a basic operation of a rechargeable lithium battery, and improves transportation of the lithium ions between positive and negative electrodes. Typical examples of the lithium salt may include at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (where x and y are integers of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

### Rechargeable Lithium Battery

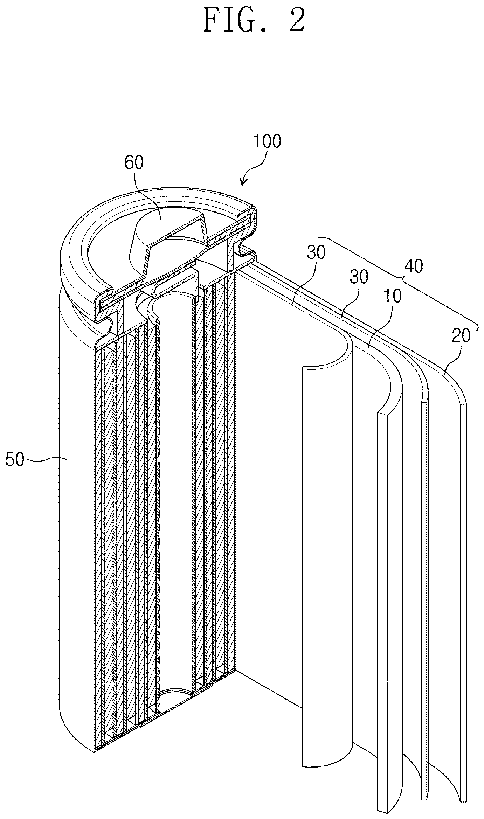

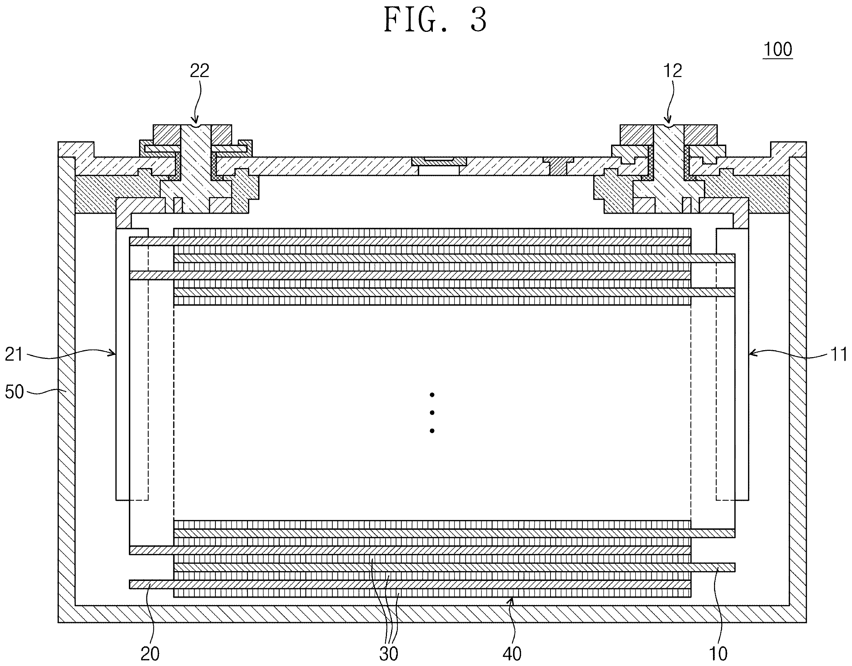

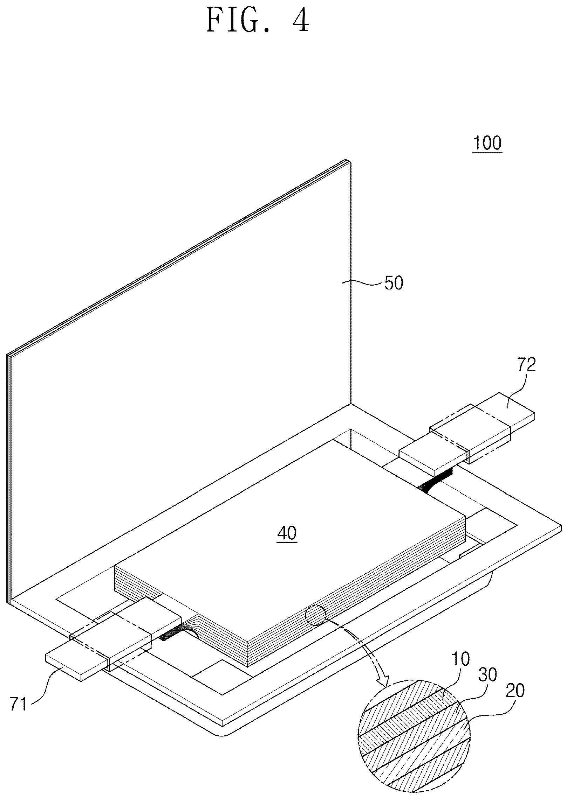

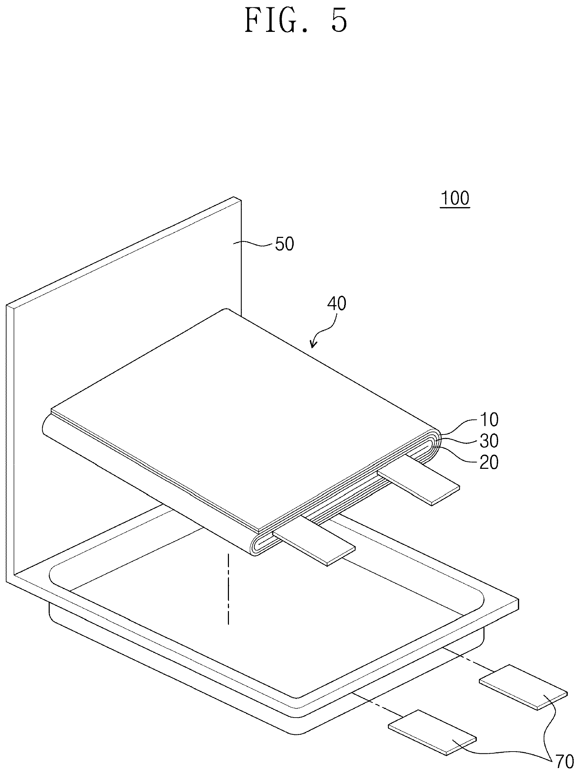

The rechargeable lithium battery may be classified into cylindrical, prismatic, pouch, or coin-type batteries, and the like depending on their shape. FIGS. 2 to 5 are schematic views showing a rechargeable lithium battery according to an example embodiment, and FIG. 2 shows a cylindrical battery, FIG. 3 shows a prismatic battery, and FIGS. 4 and 5 show pouch-type batteries. Referring to FIGS. 2 to 4, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 2. In FIG. 3, the rechargeable lithium battery 100 may include a positive electrode lead tab 11, a positive electrode terminal 12, a negative electrode lead tab 21, and a negative electrode terminal 22. As shown in FIGS. 4 and 5, the rechargeable lithium battery 100 may include an electrode tab 70 illustrated in FIG. 5, which may be, for example, a positive electrode tab 71 and a negative electrode tab 72 illustrated in FIG. 4 and forming an electrical path for inducing the current formed in the electrode assembly 40 to the outside of the battery 100.

In example embodiments of the present disclosure, which will be described later, descriptions of technical features duplicated with the rechargeable lithium battery described above with reference to FIGS. 1 and 5 will not be provided again, and the difference will be described in detail.

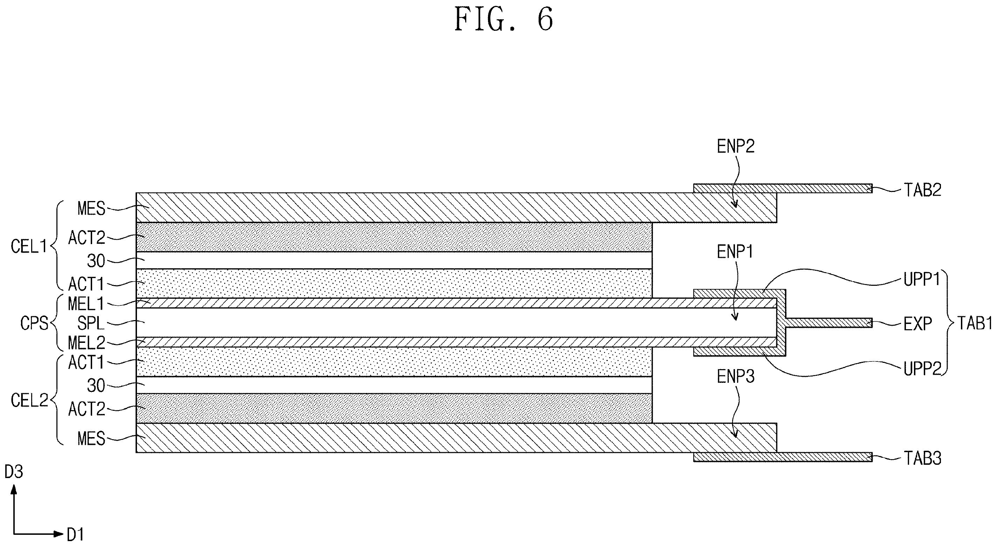

FIG. 6 is a cross-sectional view for describing a rechargeable lithium battery according to an example embodiment of the present disclosure. Referring to FIG. 6, a composite substrate CPS, a first battery cell CEL1 on one surface of the composite substrate CPS, and a second battery cell CEL2 on the other surface of the composite substrate CPS may be provided. The first battery cell CEL1, the second battery cell CEL2, and the composite substrate CPS in FIG. 6 may constitute one bi-cell. The first battery cell CEL1, the second battery cell CEL2, and the composite substrate CPS in FIG. 6 may constitute the electrode assembly 40 described above with reference to FIGS. 3 to 5.

The first battery cell CEL1 and the second battery cell CEL2 may each include a first active material layer ACT1, a separator 30, a second active material layer ACT2, and a metal substrate MES. The first active material layer ACT1 for both the first battery cell CEL1 and the second battery cell CEL2 may be on the composite substrate CPS. The second active material layer ACT2 may be spaced apart from the first active material layer ACT1 with the separator 30 therebetween. The metal substrate MES may be provided on the second active material layer ACT2.

The first active material layer ACT1 may be or include either the positive electrode active material layer AML1 or the negative electrode active material layer AML2 described above with reference to FIG. 1. The second active material layer ACT2 may be or include the other one of the positive electrode active material layer AML1 and the negative electrode active material layer AML2 described above with reference to FIG. 1. In an example embodiment of the present disclosure, the first active material layer ACT1 may be or include the positive electrode active material layer AML1, and the second active material layer ACT2 may be or include the negative active material layer AML2. The metal substrate MES may be or include the current collector COL1 or COL2 described above with reference to FIG. 1.

The composite substrate CPS may include a support layer SPL, and a first metal layer MEL1 and a second metal layer MEL2 each provided on opposite sides of the support layer SPL. The first metal layer MEL1 of the composite substrate CPS may be in contact with the first active material layer ACT1 of the first battery cell CEL1. The second metal layer MEL2 of the composite substrate CPS may be in contact with the first active material layer ACT1 of the second battery cell CEL2. The first metal layer MEL1 and the second metal layer MEL2 of the composite substrate CPS may correspond to the current collector COL1 or COL2 described above with reference to FIG. 1.

The support layer SPL may include a polymer film. For example, the support layer SPL may include at least one of a polyethylene film, a polypropylene film, a polyvinylidene chloride film, or a multilayer film containing a combination thereof. The support layer SPL may have desired or improved ion permeability and desired or improved mechanical strength.

The first metal layer MEL1 and the second metal layer MEL2 may each include at least one of aluminum, aluminum alloy, copper, copper alloy, nickel, nickel alloy, titanium, titanium alloy, iron, iron alloy, silver, and silver alloy.

In an example embodiment of the present disclosure, the first metal layer MEL1 and the second metal layer MEL2 may each have a thickness of ≥ 200 nm to ≤ 5 µm. The support layer SPL may have a thickness of ≥ 3 µm to ≤ 10 µm. The thickness of the support layer SPL may be greater than the thickness of each of the first metal layer MEL1 and the second metal layer MEL2.

The composite substrate CPS may include a first end ENP1 at one end thereof. The metal substrate MES of the first battery cell CEL1 may include a second end ENP2 at one end thereof. The metal substrate MES of the second battery cell CEL2 may include a third end ENP3 at one end thereof.

A first tab TAB1 may be formed at the first end ENP1 of the composite substrate CPS. The first tab TAB1 may include a first connection portion UPP1, a second connection portion UPP2, and an extension portion EXP. The first connection portion UPP1 may be in contact with the first metal layer MEL1 of the composite substrate CPS. The second connection portion UPP2 may be in contact with the second metal layer MEL2 of the composite substrate CPS. The extension portion EXP may connect the first connection portion UPP1 and the second connection portion UPP2 together. The extension portion EXP may extend horizontally from the first end ENP1 toward the first direction D1.

The first metal layer MEL1 and the second metal layer MEL2 may be electrically connected through the first tab TAB1. The first tab TAB1 may be configured to apply a common voltage to the first metal layer MEL1 and to the second metal layer MEL2.

A second tab TAB2 may be provided at the second end ENP2 of the metal substrate MES. The second tab TAB2 may be configured to apply a voltage to the metal substrate MES of the first battery cell CEL1. A third tab TAB3 may be provided at the third end ENP3 of the metal substrate MES. The third tab TAB3 may be configured to apply a voltage to the metal substrate MES of the second battery cell CEL2.

The first tab TAB1 may constitute any one of the positive electrode tab (or positive electrode lead tab) and the negative electrode tab (or negative electrode lead tab) described above with reference to FIGS. 2 to 4. The second tab TAB2 and the third tab TAB3 may constitute the other one of the positive electrode tab (or positive electrode lead tab) and the negative electrode tab (or negative electrode lead tab) described above with reference to FIGS. 2 to 4.

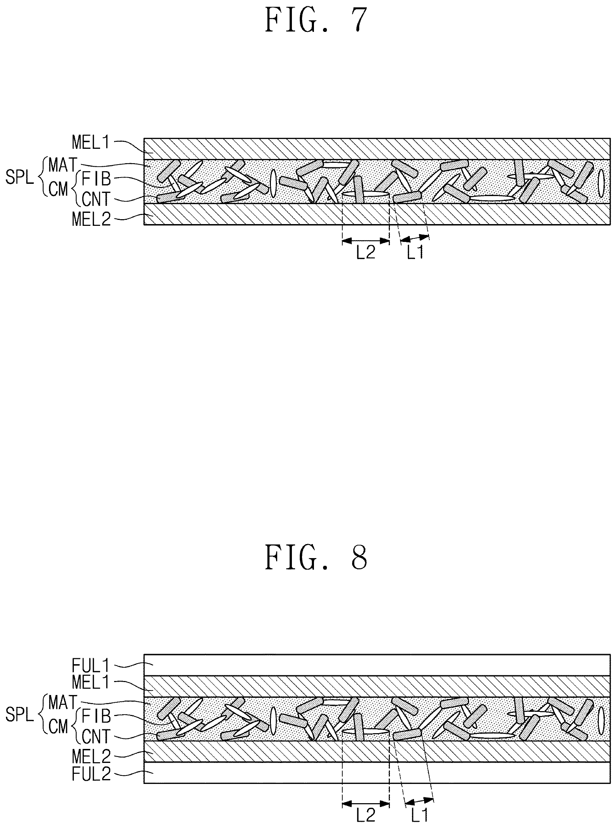

FIG. 7 is a cross-sectional view for describing a composite substrate for a rechargeable lithium battery according to an example embodiment of the present disclosure. Referring to FIG. 7, the composite substrate for a rechargeable lithium battery may include a support layer SPL including a polymer resin matrix MAT and two or more conductive materials CM, and metal layers MEL1 and MEL2 on at least one surface of the support layer SPL, or on opposite surfaces of the support layer SPL.

The polymer resin matrix MAT may be configured to maintain the shape of the support layer SPL and deliver the load. The polymer resin matrix MAT may include a polymer resin. A composite substrate CPS containing such a polymer resin may be relatively lighter than a metal substrate. Accordingly, the use of the composite substrate CPS containing a polymer resin may enable a rechargeable lithium battery to have a relatively high energy density per unit mass.

The polymer resin matrix MAT may include a thermoplastic resin. For example, the thermoplastic resin may include at least one of polyethylene terephthalate (PET), polybutylene terephthalate (PBT), polytrimethylene terephthalate (PTT), polyethylene naphthalate (PEN), polyethylene (PE), polypropylene (PP), polybutylene (PB), polystyrene (PS), polyoxymethylene (POM), polyamide (PA), polyphenylene sulfide (PPS), polyketone (PK), polyetherketone (PEK), polyetheretherketone (PEEK), polyetherketoneketone (PEKK), polyethernitrile (PEN), polytetrafluoroethylene (PTFE), polycarbonate (PC), polymethyl methacrylate (PMMA), polyvinyl chloride (PVC), polyphenylene ether (PPE), polyimide (PI), polyamideimide (PAI), polyetherimide (PEI), polysulfone (PSU), polyethersulfone (PES), and polyarylate (PAR). The inclusion of a thermoplastic resin in the polymer resin matrix MAT may facilitate processing, and may thus promote the dispersion of the conductive material CM therein.

The conductive material CM may be dispersed in the support layer SPL to form a conductive path in the support layer SPL. A composite substrate CPS containing such a conductive material CM may enable the support layer SPL to have improved electrical conductivity. Accordingly, the inclusion of the composite substrate CPS containing the conductive material CM may enable a rechargeable lithium battery to have improved output characteristics. The conductive material CM may have a specific resistance of 0.1 Ω*cm or less.

The conductive material CM may amount to ≥30 mass% to ≤ 70 mass% with respect to a total mass of the support layer SPL. For example, the conductive material CM may amount to ≥ 35 mass% to ≤ 65 mass% with respect to a total volume of the support layer SPL, and the conductive material CM may amount to ≥ 40 mass% to ≤ 60 mass% with respect to a total volume of the support layer SPL. When the conductive material CM is contained below the above range, a conductive path is not fully formed in the support layer SPL, leading to insignificant improvement in electrical conductivity. When the conductive material CM is greater than the above range, the content of polymer resin is relatively low, and accordingly, a rechargeable lithium battery may have reduced energy density per unit mass.

The support layer according to an example embodiment of the present disclosure may include two or more types of conductive materials, and the two or more conductive materials may be two or more materials including at least one of a conductive metal, a conductive polymer, a conductive oxide, a fibrous material (FIB), and a carbon nanotube (CNT).

The conductive metal may include, for example, at least one of indium, tin, beryllium, strontium, lanthanum, niobium, tantalum, chromium, nickel, iron, silver, gold, cobalt, copper, zinc, antimony, iridium, cerium, or a combination thereof.

The conductive polymer may include, for example, at least one of polyaniline, polypyrrol, polythiophene, or a combination thereof.

The conductive oxide may include, for example, at least one of tin oxide, indium-tin oxide, zinc oxide, aluminum-zinc oxide, titanium oxide, tungsten oxide, molybdenum oxide, vanadium oxide, and iron oxide, or a combination thereof.

The fibrous material (FIB) may include, for example, at least one of carbon fiber, metal coated fiber (MCF), metallic fiber, or a combination thereof.

The carbon nanotube (CNT) may include, for example, at least one of a single-walled carbon nanotube (SWCNT), a double-walled carbon nanotube (DWCNT), and a multi-walled carbon nanotube (MWCNT), or a combination thereof. The single-walled carbon nanotube (SWCNT) has desired or improved electrical conductivity and thus improves the electrical conductivity of the support layer SPL, allowing rechargeable lithium batteries to have improved output characteristics. The multi-walled carbon nanotube (MWCNT) has desired or improved mechanical strength and thus improves the tensile strength and yield strength of the support layer SPL, thereby improving processability in an electrode process. The double-walled carbon nanotube (DWCNT) may improve the electrical conductivity of the support layer SPL and has desired or improved mechanical strength to improve the tensile strength and yield strength of the support layer SPL, thereby improving processability in an electrode process.

According to an example embodiment of the present disclosure, the conductive material CM may include a conductive fibrous material (FIB) and a conductive carbon nanotube (CNT). The carbon nanotube (CNT) has desired or improved mechanical strength and electrical conductivity, and may thus improve the mechanical strength and electrical conductivity of the composite substrate CPS in proportion to the content thereof in the support layer SPL.

The carbon nanotube (CNT) is relatively expensive per unit mass and is subjected to synthesis performed at a high level of difficulty. When the content of carbon nanotube (CNT) in the support layer SPL is greater than a given level, mass productivity may be reduced. When the content of carbon nanotube (CNT) is greater than a given level, the carbon nanotube (CNT) may not be sufficiently dispersed in the polymer resin matrix MAT, and may thus partly agglomerate, causing brittle fracture in the relevant area when tension is applied during a winding process, thereby failing to form an electrode to cause breakage.

When the content of carbon nanotube (CNT) in the support layer SPL is relatively low, the issues described above may be reduced or prevented, but the electrical conductivity of the support layer SPL may be reduced.

The conductive fibrous material (FIB) may provide a conductive path capable of electrically connecting carbon nanotubes (CNT) dispersed in the support layer SPL. Accordingly, even when the content of carbon nanotube (CNT) in the support layer SPL is regulated to be low, the fibrous material (FIB) may greatly improve the electrical conductivity of the support layer SPL by connecting the carbon nanotubes (CNT).

The carbon nanotube (CNT) may amount to ≥ 10 parts by weight to ≤ 50 parts by weight with respect to 100 parts by weight of the fibrous material (FIB). When the carbon nanotube (CNT) is contained at less than the above range, a conductive path may not be fully formed in the support layer SPL, leading to reduced output of rechargeable lithium batteries. When the carbon nanotube (CNT) is contained at greater than the above range, the carbon nanotube (CNT) may not be sufficiently dispersed in the polymer resin matrix MAT and may become brittle, thereby failing to form an electrode to cause breakage.

The carbon nanotube (CNT) may have a diameter of ≥ 0.5 nm to ≤ 100 nm. The carbon nanotube (CNT) may have a length L1 of ≥ 100 nm to ≤ 10 µm. The carbon nanotube (CNT) satisfying the above range is sufficiently dispersed in the polymer resin matrix MAT and may thus have the effect of increasing the electrical conductivity and mechanical strength of the support layer SPL.

The fibrous material (FIB) may have an average length L2 of 10 µm or less. When single fibers of a certain length or less constitute the fibrous material (FIB), sufficiently dispersion takes place through three-dimensional random orientation, and forming a conductive path is promoted, thereby improving the electrical conductivity of the support layer SPL. The fibrous material (FIB) may have an average length of 100 nm or greater.

According to an example embodiment of the present disclosure, the fibrous material (FIB) may include carbon fiber. The carbon fiber is relatively lighter than metallic materials, allowing the composite substrates CPS to be lighter. The carbon fiber may have a density of ≥ 1.5 g/cm³ to ≤ 2.5 g/cm³, and ≥ 1.7 g/cm³ to ≤ 2.2 g/cm³. In addition, the carbon fiber has satisfactory electrical conductivity, and may thus form a conductive path in the support layer SPL. The carbon fiber may have an electrical conductivity of ≥ 1×10⁴ S/m to ≤ 1×10⁶ S/m, and ≥ 5.5×10⁴ S/m to ≤ 9×10⁵ S/m.

The carbon fiber may include PAN carbon fiber. The PAN carbon fiber has high compatibility with the carbon nanotube (CNT) and may thus form a conductive path in a region where the PAN carbon fiber and the CNT come into contact with each other. The PAN carbon fiber is relatively lighter among carbon fibers, allowing the composite substrates CPS to be lighter. The PAN carbon fiber may have a density of ≥ 1.5 g/cm³ to ≤ 2 g/cm³, ≥ 1.7 g/cm³ to ≤ 1.95 g/cm³, and ≥ 1.76 g/cm³ to ≤ 1.93 g/cm³. The PAN carbon fiber has satisfactory electrical conductivity, and may thus form a conductive path in the support layer SPL. The PAN carbon fiber may have an electrical conductivity of ≥ 1×10⁴ S/m to ≤ 1×10⁵ S/m, and ≥ 5.56×10⁴ S/m to ≤ 6.67×10⁵ S/m.

The carbon fiber may include pitch carbon fiber. The pitch carbon fiber has relatively higher electrical conductivity among carbon fibers, and may thus form a conductive path in the support layer SPL. The pitch carbon fiber may have an electrical conductivity of ≥ 1×10⁴ S/m to ≤ 1×10⁶ S/m, and ≥ 7.69×10⁴ S/m to ≤ 9.09×10⁵ S/m. The pitch carbon fiber is relatively lighter than metallic materials, allowing the composite substrates CPS to be lighter. The pitch carbon fiber may have a density of ≥ 1.8 g/cm³ to ≤ 3 g/cm³, and ≥ 1.9 g/cm³ to ≤ 2.2 g/cm³.

According to an example embodiment of the present disclosure, the fibrous material (FIB) may include metal coated carbon fiber. The metal coated carbon fiber is relatively lighter than metallic materials, allowing the composite substrates CPS to be lighter. The metal coated carbon fiber may have a density of ≥ 2 g/cm³ to ≤ 3 g/cm³, and ≥ 2.1 g/cm³ to ≤ 2.8 g/cm³. In addition, the metal coated carbon fiber has desired or improved electrical conductivity, and may thus form a conductive path in the support layer SPL. The metal coated carbon fiber may have an electrical conductivity of ≥ 1×10⁵ S/m to ≤ 1×10⁷ S/m, and ≥ 8.5×10⁵ S/m to ≤ 3×10⁶ S/m. The conductive metal may include at least one of copper, copper alloy, zinc, zinc alloy, silver, silver alloy, gold, gold alloy, platinum, platinum alloy, antimony, antimony alloy, manganese, manganese alloy, nickel, nickel alloy, tin, tin alloy, vanadium, vanadium alloy, indium, indium alloy. The coated conductive metal may have a thickness of ≥ 50 nm to ≤ 1 µm, ≥ 90 nm to ≤ 600 nm, ≥ 90 nm to ≤ 400 nm, and ≥ 90 nm to ≤ 280 nm.

According to an example embodiment of the present disclosure, the fibrous material (FIB) may include metallic fiber. The metal fiber is convenient to deal with in manufacturing and has desired or improved electrical conductivity, and may thus be favorable for forming a conductive path in the support layer SPL. The metal fiber may have an electrical conductivity of ≥ 1×10⁶ S/m to ≤ 1×10⁸ S/m. The metal fiber may have an electrical conductivity of 1.798×10⁶ S/m or greater, 4.87×10⁶ S/m or greater, 6.21×10⁶ S/m or greater, 9.44×10⁶ S/m or greater, 1.04×10⁷ S/m or greater, 1.17×10⁷ S/m or greater, 1.46×10⁷ S/m or greater, 3.5×10⁷ S/m or greater, 4.52×10⁷ S/m or greater, 5.8×10⁷ S/m or greater, and 6×10⁷ S/m or greater. The metal fiber may have a density of ≥ 1 g/cm³ to ≤ 20 g/cm³. The metal fiber may have a density of 10.49 g/cm³ or less, 8.96 g/cm³ or less, 4.5 g/cm³ or less, and 2.7 g/cm³ or less. The metallic fiber may include at least one of copper, copper alloy, aluminum, aluminum alloy, gold, gold alloy, silver, silver alloy, nickel, nickel alloy, cobalt, cobalt alloy, tin, and tin alloy.

Referring to FIG. 8, a composite substrate for a rechargeable lithium battery according to another example embodiment of the present disclosure may include a support layer SPL including a polymer resin matrix MAT and a conductive material CM, metal layers MEL1 and MEL2 on at least one surface of the support layer SPL, and functional layers FUL1 and FUL2 on the metal layers MEL1 and MEL2. The functions and roles of the same components as in the example embodiment described above are the same, and thus redundant descriptions will not be provided again below.

The functional layers FUL1 and FUL2 may include metal carbide oxide. Each of the functional layers FUL1 and FUL2 is disposed on a metal layer, which may reduce the interfacial resistance of the composite substrate CPS. With reference to FIG. 6, the functional layers FUL1 and FUL2 are disposed between the first active material layer ACT1 and the metal layers MEL1 and MEL2, and may thus improve adhesion between the composite substrate CPS and the first active material layer ACT1.

The metal carbide oxide may include carbon, oxygen, and a metal that is or includes at least one of aluminum, titanium, hafnium, tantalum, zirconium, or tungsten. With respect to a total weight of the functional layer, the carbon may amount to ≥ 5 wt% to ≤ 85 wt%, the oxygen may amount to ≥ 5 wt% to ≤ 60 wt%, and the metal may amount to ≥ 5 wt% to ≤ 40 wt%.

The functional layers FUL1 and FUL2 may be formed through plasma enhanced chemical vapor deposition (PECVD), and a composition ratio of metal, carbon, and oxygen of the metal carbide oxide may be controlled according to the deposition pressure, plasma power, and deposition temperature of the plasma enhanced chemical vapor deposition.

The deposition pressure may be performed in the range of ≥ 200 mTorr to ≤ 800 mTorr, the deposition temperature may be performed in the range of ≥ 25 °C to ≤ 600 °C, and the plasma power may be performed in the range of ≥ 50 W to ≤ 150 W.

The functional layer may be formed as a single layer in which the metal oxide is substantially uniformly distributed in hydrocarbon. The functional layer may have a thickness of ≥ 40 nm to ≤ 500 nm.

Hereinafter, example embodiments of the present disclosure will be described in more detail as follows. However, the example embodiments shown below are provided to assist in understanding of the present disclosure, and the scope of the present disclosure is not limited to the Examples in any sense.

### Example 1

Pelletized PAN carbon fiber and carbon nanotube (CNT) were mixed through ball milling, and the mixture was subsequently dispersed in a polyethylene terephthalate (PET) matrix to prepare a support layer. 5 wt% of carbon fiber and 35 wt% of carbon nanotube were contained with respect to a total of 100 wt% of the support layer. A copper metal layer was stacked on both sides of the support layer prepared in this way to complete a composite substrate. The support layer had a thickness of 10 µm, and the metal layer had a thickness of 1 µm.

### Example 2

A composite substrate was prepared in the same manner as in Example 1, with a difference that 15 wt% of carbon fiber and 35 wt% of carbon nanotube were contained with respect to a total of 100 wt% of the support layer.

### Example 3

A composite substrate was prepared in the same manner as in Example 1, with a difference that pitch carbon fiber was used as carbon fiber.

### Example 4

A composite substrate was prepared in the same manner as in Example 1, with a difference that carbon fiber coated with a copper metal was used instead of carbon fiber.

### Example 5

A composite substrate was prepared in the same manner as in Example 1, with a difference that aluminum fiber was used instead of carbon fiber.

### Example 6

A composite substrate further including a thin film of metal carbide oxide formed on both sides of the support layer prepared in Example 1 through plasma enhanced chemical vapor deposition (PECVD) was prepared.

### Example 7

A composite substrate was prepared in the same manner as in Example 1, with a difference that 2 wt% of carbon fiber and 18 wt% of carbon nanotube were contained with respect to a total of 100 wt% of the support layer.

### Example 8

It was attempted to mix 15 wt% of carbon fiber and 65 wt% of carbon nanotube with respect to a total of 100 wt% of the support layer, but the carbon fiber and the carbon nanotube were not sufficiently dispersed in a polyethylene terephthalate (PET) matrix, and the matrix was prevented from keeping the form thereof, thereby failing to form a substrate.

### Comparative Example 1

A composite substrate was prepared in the same manner as in Example 1, with a difference that the carbon fiber and the carbon nanotube were not dispersed and a polyethylene terephthalate (PET) matrix was used as a support layer.

### Comparative Example 2

A composite substrate was prepared in the same manner as in Example 1, with a difference that the carbon fiber was not included and 5 wt% of carbon nanotube was contained with respect to a total of 100 wt% of the support layer.

### Comparative Example 3

A composite substrate was prepared in the same manner as in Example 1, with a difference that the carbon fiber was not included and 20 wt% of carbon nanotube was contained with respect to a total of 100 wt% of the support layer.

### Comparative Example 4

An attempt was made to prepare a composite substrate by not including carbon fiber and adding 40 wt% of carbon nanotube with respect to a total of 100 wt% of the support layer, but the carbon nanotube were not sufficiently dispersed in the matrix, thereby failing to form an electrode and causing breakage.

Hereinafter, the density, electrical conductivity, and adhesion of the composite substrates prepared in Examples 1 to 8 and Comparative Examples 1 to 4 were measured and shown in Table 1 below.

**[Table 1]**

| Composite substrate Sample | Type of conductive material | | Content of conductive material (wt%) | | Composite material density (g/cm3) | Composite material electrical conductivity (S/m) | Composite substrate adhesion (gf/mm) | Note |
|---|---|---|---|---|---|---|---|---|
| | CNT | FIB | CNT | FIB | | | | |
| Example 1 | CNT | CF (PAN) | 5 | 35 | 4.15 | 5.1x10⁶ | 0.87 | |
| Example 2 | CNT | CF (PAN) | 15 | 35 | 4.19 | 10.1x10⁶ | 1.03 | |
| Example 3 | CNT | CF (Pitch) | 5 | 35 | 4.18 | 5.1x10⁶ | 0.88 | |
| Example 4 | CNT | MCF | 5 | 35 | 4.33 | 5.6x10⁶ | 0.86 | |
| Example 5 | CNT | MF | 5 | 35 | 6.66 | 14.2x10⁶ | 0.77 | |
| Example 6 | CNT | CF (PAN) | 5 | 35 | 4.15 | 6.3x10⁶ | 1.85 | Functional layer included |
| Example 7 | CNT | CF (PAN) | 2 | 18 | 3.99 | 2.9x10⁶ | 0.87 | |
| Example 8 | CNT | CF (PAN) | 15 | 65 | 4.45 | - | - | No formation of substrate |
| Comparative Example 1 | - | - | - | - | 3.83 | 2.6x10⁶ | 0.88 | Cu double-sided plating (1 µm) |
| Comparative Example 2 | CNT | - | 5 | - | 3.85 | 2.8x10⁶ | 0.88 | |
| Comparative Example 3 | CNT | - | 20 | - | 3.90 | 2.9x10⁶ | 0.87 | |
| Comparative Example 4 | CNT | - | 40 | - | 3.98 | - | - | Broken plate |

Referring to Table 1, the composite substrates in Examples 1 to 8 have relatively higher density and electrical conductivity than Comparative Examples 1 to 4.

In Example 8 and Comparative Example 4, where the content of the conductive material was high, the composite substrates were brittle and broken without forming an electrode.

Comparative Example 1, in which no conductive material was added, had significantly lower electrical conductivity than Examples 1-6, and in Comparative Examples 2 and 3, in which an appropriate amount of CNT was added, electrical conductivity was also relatively low compared to Examples 1-6. Accordingly, it can be concluded that the presence or absence of conductive fiber (FIB) along with CNT is a factor that determines the electrical conductivity characteristics of composite substrates.

In particular, in Example 6 which further includes a functional layer, the composite substrate had a significant increase in adhesion.

A composite substrate according to the present disclosure includes a conductive material in a support layer to which a polymer resin is applied, and may thus enable the support layer to have improved electrical conductivity. Accordingly, the composite substrate of the present disclosure may have both enhanced energy density and improved electrical conductivity. A rechargeable lithium battery including the composite substrate of the present disclosure may have desired or improved cell performance.

Although the example embodiments of the present disclosure have been described above with reference to the accompanying drawings, the present disclosure may be applied in other forms without changing the technical idea or essential features thereof. Therefore, the above-described example embodiments are to be considered in all aspects as illustrative and not restrictive.

## Claims

1. A composite substrate (CPS) for a rechargeable lithium battery (100), the composite substrate (CPS) comprising:
a support layer (SPL) including a polymer resin matrix (MAT) and two or more conductive materials (CM); and
a metal layer (MEL) on at least one surface of the support layer (SPL),
wherein the two or more conductive materials (CM) comprise two or more materials including at least one of a conductive metal (CM), a conductive polymer, a conductive oxide, a fibrous material (FIB), and a carbon nanotube (CNT).

2. The composite substrate (CPS) for a rechargeable lithium battery (100) of claim 1, wherein the polymer resin matrix (MAT) comprises a thermoplastic resin.

3. The composite substrate (CPS) for a rechargeable lithium battery (100) of claim 2, wherein the thermoplastic resin comprises at least one of polyethylene terephthalate (PET), polybutylene terephthalate (PBT), polytrimethylene terephthalate (PTT), polyethylene naphthalate (PEN), polyethylene (PE), polypropylene (PP), polybutylene (PB), polystyrene (PS), polyoxymethylene (POM), polyamide (PA), polyphenylene sulfide (PPS), polyketone (PK), polyetherketone (PEK), polyetheretherketone (PEEK), polyetherketoneketone (PEKK), polyethernitrile (PEN), polytetrafluoroethylene (PTFE), polycarbonate (PC), polymethyl methacrylate (PMMA), polyvinyl chloride (PVC), polyphenylene ether (PPE), polyimide (PI), polyamideimide (PAI), polyetherimide (PEI), polysulfone (PSU), polyethersulfone (PES), and polyarylate (PAR).

4. The composite substrate (CPS) for a rechargeable lithium battery (100) of any of claims 1 to 3, wherein the two or more conductive materials (CM) amounts to ≥ 30 mass% to ≤ 70 mass% with respect to a total mass of the support layer (SPL).

5. The composite substrate (CPS) for a rechargeable lithium battery (100) of any of claims 1 to 4, wherein the metal layer (MEL) comprises at least one of aluminum, aluminum alloy, copper, copper alloy, nickel, nickel alloy, titanium, titanium alloy, iron, iron alloy, silver, and silver alloy.

6. The composite substrate (CPS) for a rechargeable lithium battery (100) of any of claims 1 to 5, wherein the fibrous material (FIB) has an average length of ≥ 100 nm to ≤ 10 µm.

7. The composite substrate (CPS) for a rechargeable lithium battery (100) of any of claims 1 to 6, wherein the fibrous material (FIB) comprises carbon fiber.

8. The composite substrate (CPS) for a rechargeable lithium battery (100) of claim 7, wherein the carbon fiber comprises at least one of PAN carbon fiber and pitch carbon fiber.

9. The composite substrate (CPS) for a rechargeable lithium battery (100) of any of claims 1 to 8, wherein the fibrous material (FIB) comprises metal coated carbon fiber.

10. The composite substrate (CPS) for a rechargeable lithium battery (100) of any of claims 1 to 9, wherein the conductive metal (CM) comprises at least one of copper, copper alloy, zinc, zinc alloy, silver, silver alloy, gold, gold alloy, platinum, platinum alloy, antimony, antimony alloy, manganese, manganese alloy, nickel, nickel alloy, tin, tin alloy, vanadium, vanadium alloy, indium, indium alloy, tin, and tin alloy.

11. The composite substrate (CPS) for a rechargeable lithium battery (100) of any of claims 1 to 10, wherein the fibrous material (FIB) comprises metallic fiber.

12. The composite substrate (CPS) for a rechargeable lithium battery (100) of claim 11, wherein the metallic fiber comprises at least one of copper, copper alloy, aluminum, aluminum alloy, gold, gold alloy, silver, silver alloy, nickel, nickel alloy, cobalt, cobalt alloy, tin, and tin alloy.

13. The composite substrate (CPS) for a rechargeable lithium battery (100) of any of claims 1 to 12, wherein the metal layer (MEL) has a thickness of ≥ 200 nm to ≤ 5 µm, and
the support layer (SPL) has a thickness of ≥ 3 µm to ≤ 10 µm.

14. The composite substrate (CPS) for a rechargeable lithium battery (100) of any of claims 1 to 13, wherein the carbon nanotube (CNT) comprises at least one of a single-walled carbon nanotube (SWCNT), a double-walled carbon nanotube (DWCNT), and a multi-walled carbon nanotube (MWCNT).

15. The composite substrate (CPS) for a rechargeable lithium battery (100) of any of claims 1 to 14, wherein the carbon nanotube (CNT) amounts to ≥ 10 parts by weight to ≤ 50 parts by weight with respect to 100 parts by weight of the fibrous material (FIB).
